# FASCICULE DE BREVET EUROPEEN

(11) **EP 0 637 764 B1**
(45) Date de publication et mention de la délivrance du brevet: **25.10.2000**
(21) Numéro de dépôt: 94401565.0
(22) Date de dépôt: 07.07.1994
(51) Int. Cl.: G02B 6/30

(54) **Procédé de fabrication d'une structure de couplage optique intégrante un guide optique clivé à un support de fibre optique**
Herstellung einer optischen Kopplungsstruktur, die einen abgespaltenen optischen Wellenleiter und eine Halterung für optische Fasern integriert
Fabrication of an optical coupling structure, which integrates a cleaved optical waveguide and a support for an optical fiber

(30) Priorité: 09.07.1993 FR 9308463
(43) Date de publication de la demande: 08.02.1995
(73) Titulaire: FRANCE TELECOM, 75015 Paris (FR)
(72) Inventeur: Menigaux, Louis, F-91440 Bures sur Yvette (FR); Bruno, Adrien, F-91120 Palaiseau (FR)
(74) Mandataire: Dubois-Chabert, Guy

(56) Documents cités:
- EP-A- 0 305 204
- EP-A- 0 361 153
- EP-A- 0 538 633
- DE-A- 3 715 071
- DE-A- 4 013 630
- US-A- 4 466 696
- US-A- 4 966 433
- US-A- 5 128 282
- PATENT ABSTRACTS OF JAPAN vol. 6, no. 212 (P-151) 26 Octobre 1982 & JP-A-57 119 314 (TATEISHI DENKI K K) 24 Juillet 1982
- PATENT ABSTRACTS OF JAPAN vol. 13, no. 329 (P-904) 25 Juillet 1989 & JP-A-01 094 305 (HITACHI) 13 Avril 1989
- IEEE PHOTONICS TECHNOLOGY LETTERS, vol.5, no.2, Février 1993, NEW YORK pages 169 - 171 ROTHMAN ET AL.
- PATENT ABSTRACTS OF JAPAN vol. 6, no. 243 (E-145) 02 Décembre 1982 & JP-A-57 143 890 (FUJITSU KK) 06 Septembre 1982

## Description

La présente invention a pour objet un procédé de fabrication d'une structure semi-conductrice intégrant monolithiquement en particulier un ou plusieurs guides optiques de type ruban à extrémité clivée, à un support d'une ou plusieurs fibres optiques, l'axe optique de la ou des fibres devant être confondu avec l'axe optique du ou des guides.

La structure monolithique est utilisable essentiellement dans le domaine des télécommunications optiques et des capteurs pour la télémétrie. En particulier, la structure intégrée peut être utilisée pour assurer le couplage d'une fibre optique avec une diode laser ou un récepteur optique d'un circuit de réception hétérodyne, par exemple pour des systèmes de liaison optique en détection cohérente. Cette structure pourra aussi être utilisée pour les interconnexions optiques entre, par exemple des puces électroniques rapides à haut degré d'intégration ou entre ordinateurs ou encore à l'intérieur d'ordinateurs.

L'invention est basée sur la gravure d'un substrat monocristallin en utilisant des plans cristallins du cristal, pour définir un logement en forme de V dans le substrat pour la fibre. Ce principe est notamment décrit pour un substrat de silicium dans le document (1) de H.P. Hsu et A.F. Milton, "Flip-chip approach to endfire coupling between single-mode optical fibres and channel waveguides", Electronics letters, vol. 12, N°16, Août 1976, p.404-405 et dans le document (2) de Blonder et al., US-A-4 966 433.

On peut se reporter également à titre d'illustration de techniques d'alignement d'une fibre optique et d'un guide d'onde, aux documents US-A-4 466 696, EP-A-361 153 et IEEE Photonics Technology, vol. 5, N° 2, pp. 169-171.

Le principe de gravure selon des plans cristallins est aussi utilisé pour des substrats en matériau III-V. Voir à cet effet le document (3) EP-A-420 028 et le document (4) de M. Hamacher et al., "A novel fibre/chip coupling technique with an integrated strain relief on InP", ECOC 92 à Berlin, p. 537-540, 1992.

On a aussi envisagé la réalisation d'une gravure en forme de U dans du silicium, (voir le document (5) de G. Grand et ai., "New method for low cost and efficient optical connections between singlemode fibres and silica guides", Electronics Letters, vol. 27, n°1, p. 16-18, Janvier 1991).

La technique de gravure en forme de V du substrat en utilisant les plans cristallins est aussi décrite pour le couplage d'une diode laser et d'un photodétecteur dans le document (6) de C. Chen et S. Lee, "Monolithic integration of an AlGaAs/GaAs surface emitting laser diode and a photodetector", Appl. Phys. Lett. 59 (27), décembre 1991, p. 3592-3594.

Il est par ailleurs connu, dans le document (7) de H. Blauvelt et al., "AlGaAs lasers with micro-cleaved mirrors suitable for monolithic integration", Appl. Phys. Lett. 40(4), p.289-290, février 1992, la réalisation d'un laser en matériau III-V dont la face de sortie est réalisée par microclivage d'une poutre semi-conductrice surplombant le substrat, en utilisant des vibrations ultrasoniques.

Cette technique de microclivage par ultrasons est aussi décrite dans le document (4) pour définir la face de sortie d'un guide optique.

Pour assurer un couplage optimum entre l'extrémité d'une fibre et l'extrémité d'une structure guide, il est nécessaire que l'axe de la fibre optique et l'axe du guide soient confondus. Or, cet alignement guide-fibre est difficile à assurer du fait de la différence de taille entre le diamètre de la fibre et la largeur du guide. En outre, la face de sortie du guide en regard de la fibre doit être parfaitement clivée.

Les techniques de gravures en forme de U ou de V précédentes ne permettent pas un alignement optimum de la fibre et du guide.

Par ailleurs, les techniques de microclivage par ultrasons décrites ci-dessus n'assurent pas un clivage parfait avec un seul plan cristallin qui est optimum pour le couplage fibre-guide, mais une multitude de microplans cristallins.

Ces microplans cristallins modulés par les microfractures elles-mêmes produites par les ultrasons sont désastreuses pour un bon couplage fibre-guide.

En outre, ces techniques de microclivage ne permettent pas une protection de la face clivée lors de l'approche de la fibre, cette dernière pouvant conduire à une dégradation de la face clivée au niveau de la zone active du guide optique en particulier, lorsque cette face clivée du guide constitue la partie émettrice d'un laser. Cette dégradation de la face clivée (face clivée qui est un miroir pour la cavité laser) altère fortement les performances dudit laser.

L'invention a justement pour objet un nouveau procédé de fabrication d'une structure intégrée monolithique à guide optique clivé et un support de couplage pour fibre optique, fabriqué selon ce procédé, permettant de remédier à ces inconvénients. Elle permet en particulier le couplage d'une fibre optique avec un guide optique ou un laser, de façon optimum, sans risque de dégradation de la face clivée du guide ou du laser avec un maximum de réussite quant au clivage de la face de sortie du guide optique en bout de fibre.

Par ailleurs, dans la référence (4), il ne peut y avoir de couplage efficace entre le guide optique ruban et la fibre optique que si cette dernière a son extrémité effilée en forme de cône, ce qui complique la fabrication de la fibre, alors que le procédé de l'invention est applicable quelle que soit l'extrémité de la fibre et en particulier à une fibre simplement clivée.

A cet effet, l'invention se rapporte à un procédé de fabrication d'une structure intégrée à guide optique clivé et support de fibre, comportant les étapes suivantes :
***a***) - épitaxier successivement sur une surface plane d'un substrat monocristallin, parallèle à un premier plan d'orientation cristalline 〈1,0,0〉 du substrat comportant des plans d'arrêt de gravure, une couche d'arrêt de gravure du substrat, une couche de confinement optique inférieur, une couche active et une couche de confinement optique supérieur ;
***b***) - graver (ou décaper) les couches épitaxiées selon un motif souhaité et de façon à former au moins un ruban guide optique dont une partie au moins est orientée parallèlement à une première direction d'orientation cristalline 〈0,1,-1〉 du substrat ;
***c***) - recouvrir la structure obtenue en ***b***) d'une couche de protection résistant à une attaque chimique anisotrope par voie humide du substrat ;
***d***) - pratiquer de part et d'autre du motif, et dans la couche de protection, au moins deux ouvertures à axe longitudinal parallèle à la première direction du guide et communiquant selon une seconde direction perpendiculaire à cette première direction et parallèle à un plan de clivage de la structure ;
**e**) - soumettre à ladite attaque chimique anisotrope le substrat mis à nu lors de l'étape ***d***), cette attaque entraînant une gravure du substrat et la formation d'au moins une poutre orientée selon la première direction et ayant une extrémité libre et une extrémité fixe ; et
***f***) - soumettre ladite poutre à l'action d'un jet de fluide sous pression entraînant le clivage de la poutre au niveau de son extrémité fixe.

Selon l'application envisagée, la couche active peut être transparente (cas d'un guide de lumière) ou transparente-absorbante (cas d'un modulateur) ou encore amplificatrice (cas d'un laser ou d'un amplificateur optique), etc.

Selon l'application envisagée, l'étape ***b)*** consiste à réaliser dans ces couches épitaxiées suivant la forme adaptée au dispositif recherché (guides, lasers, amplificateurs ou circuits optoélectroniques, ...) par exemple une série de rubans guides optiques par les techniques de photolithographie et attaques chimiques humides connues de l'homme de l'art dans la direction 〈0,1,-1〉.

Les étapes ***c)*** à ***e)*** conduisent à une gravure du substrat en-dessous de chacune des poutres suffisamment profonde pour permettre un déplacement vertical de la poutre au-delà de sa limite élastique, et par conséquent le clivage de chaque poutre par jet de fluide sous pression.

En revanche, avec une distance séparant la poutre du substrat trop faible pour permettre ce déplacement la rupture de celle-ci par jet de fluide n'est pas possible : sa déformation reste dans la limite élastique et n'atteint pas la position de rupture. Ceci est notamment le cas dans les procédés décrits dans les documents (4) et (7) ; aussi, ces microclivages nécessitent l'emploi d'une technique de clivage par vibration ultrasonique beaucoup trop brutale pour obtenir à coup sûr un clivage efficace.

Le procédé de l'invention s'applique à tout substrat monocristallin présentant des plans d'arrêt de gravure ; ces plans forment en général un angle de 20 à 80° avec la direction cristalline 〈0,1,-1〉 du substrat. Ces plans d'arrêt peuvent être des plans 〈2,1,1〉 ou des plans 〈1,1,1〉.

En particulier, le substrat est tel que pour la première direction parallèle à l'orientation 〈1,-1,0〉, on obtient une gravure en forme de V, V dont les branches sont contenues dans des plans parallèles à ladite première direction.

Ainsi, l'invention s'applique à un substrat en silicium utilisant une structure guide à base de silice et/ou de nitrure de silicium ou mieux à un substrat d'InP utilisant une structure guide à base de GaInAsP et d'InP.

Lors de la réalisation d'une structure optoélectronique sur InP, il est souhaitable d'utiliser une couche d'arrêt de gravure du substrat compatible avec les performances optiques recherchées et en particulier une couche d'arrêt de gravure non absorbante à la lumière utilisée, puisque celle-ci est conservée entre la structure guide et le substrat, dans le composant final. De préférence, on utilise une couche de GaInAsP alors que l'InGaAs utilisé dans le document (4) est un absorbant pour la lumière transmise ou émise par une structure en InP. (Pour un laser sur InP, l'émission se trouve autour de 1,55µm).

Le jet de fluide peut être un jet d'eau sous pression ou un jet de gaz ou toute autre source de pression mécanique. En particulier, ce jet de fluide est un jet d'air sous pression.

La couche de protection doit être en un matériau non attaquable chimiquement par la solution de gravure utilisée pour le substrat. Dans le cas d'une solution d'attaque à base d'acide orthophosphorique et d'acide chlorhydrique pour gravure d'InP, on peut utiliser une couche de nitrure de silicium, une couche d'oxyde de silicium ou encore d'oxynitrure de silicium et en général toutes couches résistant aux solutions d'attaque chimique.

Si nécessaire, il est possible d'effectuer, avant l'étape ***f)***, au moins une encoche dans la structure, au niveau de l'extrémité fixe de la poutre servant d'amorce de clivage. Cette encoche peut être formée n'importe où aussi bien sur la poutre que sur son point d'ancrage, à condition que cette encoche soit formée à proximité de l'extrémité fixe.

L'ouverture du masque définit la forme de la gravure du substrat dans le plan 〈1,0,0〉. Ces ouvertures peuvent être rectangulaires, selon ce plan 〈1,0,0〉, avoir une largeur qui varie continûment, par exemple selon une forme en diabolo ou une largeur qui varie séquentiellement définissant ainsi, toujours dans ce plan, des marches.

Ceci peut être réalisé en formant dans la couche de protection et de chaque côté du motif, au moins deux ouvertures de forme complémentaire et symétrique par rapport à un axe parallèle à la première direction.

Afin d'assurer une manipulation de la structure obtenue, de façon aisée, il est possible de graver la structure obtenue en ***f***), de façon à éliminer au moins une partie de la structure qui fait saillie dudit plan de clivage.

La structure monolithique obtenue est destinée principalement à servir de support pour le couplage optique d'une ou plusieurs fibres optiques avec une ou plusieurs structures guides qui peuvent être des structures lasers ou autres, ou encore des ensembles guides-lasers, etc. Aussi, l'invention a aussi pour objet un support de couplage optique monolithique d'au moins une fibre optique, la gravure sous la poutre réalisant un évidement en forme de V qui sert de support à la fibre.

Le choix judicieux des cotes : épaisseurs des couches épitaxiées, largeurs des guides, longueurs des poutres, ouvertures des V (variables continûment ou séquentiellement) permet un couplage optimum guide-fibre.

Selon une variante de l'invention, il est possible également de réaliser le ruban du guide optique dans une direction autre que la direction 〈0,1,-1〉.

Par exemple, dans une application de l'invention, le guide peut être orienté parallèlement à la direction 〈0,1,1〉.

Dans ce cas, le procédé de l'invention comporte les étapes suivantes :
***a***) - épitaxier successivement sur une surface plane d'un substrat monocristallin, parallèle à un premier plan d'orientation cristalline <1,0,0>, une couche d'arrêt de gravure du substrat, une couche de confinement optique inférieur, une couche active et une couche de confinement optique supérieur ;
***b***) - graver les couches épitaxiées selon un motif souhaité et de façon à former au moins un ruban guide optique dont une partie au moins est orientée parallèlement à une première direction d'orientation cristalline 〈0,1,1〉 du substrat ;
***c***) - recouvrir la structure obtenue en ***b***) d'une couche de protection résistant à une attaque chimique et à un usinage ionique ;
***d***) - pratiquer dans la couche de protection une ouverture en forme de U entourant une extrémité du motif, ladite ouverture en U comportant une partie dite transversale devant l'extrémité du motif et des branches s'étendant respectivement de part et d'autre d'une portion du motif ;
**e**) - procéder à un usinage ionique dans l'ouverture pour obtenir une gravure en V dont les branches sont perpendiculaires à la première direction et perpendiculaires à ladite surface plane ;
***f***) - recouvrir le substrat dans une région correspondant à la partie transversale de l'ouverture, avec un masque résistant à une attaque chimique anisotrope ;
***g***) - procéder à une attaque chimique sélective anisotrope dans une partie de l'ouverture comportant les branches de manière à former une poutre orientée selon la première direction, et ayant une extrémité libre et une extrémité fixe ; et
***h***) - soumettre ladite poutre à l'action d'un jet de fluide sous pression entraînant le clivage de la poutre au niveau de son extrémité fixe.

D'autres caractéristiques et avantages de l'invention ressortiront mieux de la description qui va suivre donnée à titre illustratif et non limitatif en référence aux figures annexées, dans lesquelles :
- la figure 1 représente schématiquement en perspective un support de couplage optique pour une fibre optique, conforme à l'invention ;
- les figures 2 à 9 illustrent schématiquement les différentes étapes de fabrication du support de la figure 1 : les figures 2, 4, 5 et 7 sont des vues en coupe transversale et les figures 3, 6A, 6B, 6C et 8 sont des vues de dessus et la figure 9 est une vue en coupe longitudinale ;
- la figure 6D est une vue schématique en perspective et à échelle agrandie d'un détail de réalisation du support de l'invention conformément à la figure 6C ;
- les figures 10 et 11 sont des variantes de réalisation du support de couplage optique bi-fibre, conforme à l'invention ;
- la figure 12 est une variante de réalisation du masque de gravure du substrat ;
- les figures 13a, 13b, 13c et 13d montrent la gravure du substrat sous la poutre à plusieurs V successifs obtenue à l'aide du masque de la figure 12 ;
- la figure 14 est une autre variante de réalisation du masque de gravure du substrat ;
- la figure 15 montre le substrat gravé en utilisant le masque de la figure 14 ;
- la figure 16 est une autre variante de réalisation du masque de gravure du substrat ;
- la figure 17 est une variante de mise en oeuvre du procédé conforme à l'invention ;
- la figure 18 est une vue de dessus illustrant une étape de fabrication du support selon une variante de l'invention ;
- les figures 19A et 19B sont des sections du support selon la variante de l'invention,
- la figure 20 est une vue de dessus, comparable à la figure 18, illustrant une étape ultérieure de fabrication du support selon la variante de l'invention, et
- la figure 21 est une vue schématique en perspective d'un détail de réalisation du support de l'invention selon la variante de l'invention.

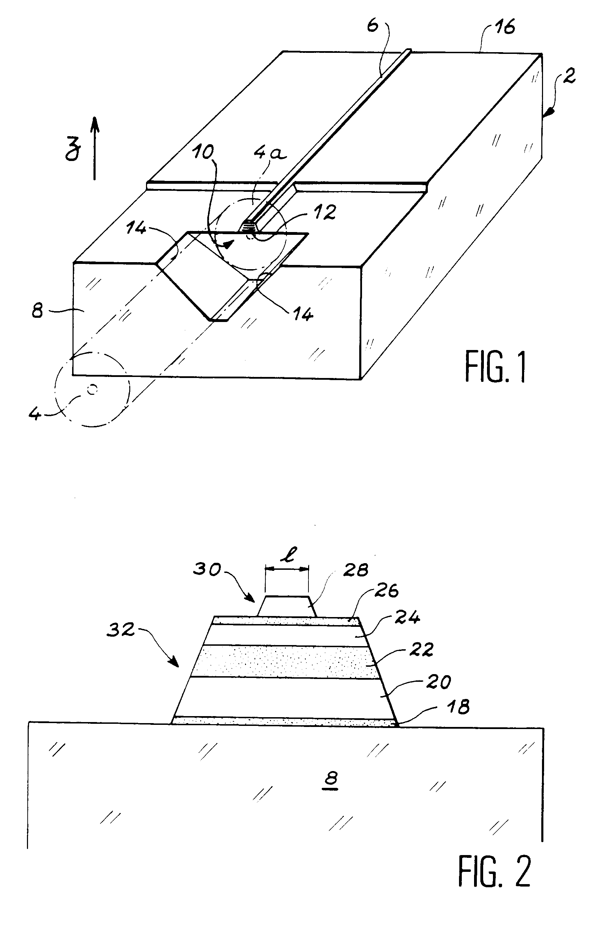

La figure 1 représente un monolithe porte-fibre et guide, de référence générale 2, pour supporter une fibre 4 et comportant un guide 6. L'axe optique de la fibre 4 et l'axe optique du guide 6 sont confondus. La fibre 4 est posée dans un évidement 10 ayant la forme d'un V, selon un plan perpendiculaire à la surface 16 du substrat et à la direction du guide 6.

Le guide 6 comporte une face clivée 12 orientée perpendiculairement au guide optique 6 et faisant face à l'extrémité 4a clivée de la fibre optique 4.

Le positionnement de la fibre optique 4, de façon que le coeur de la fibre soit en regard de la zone active clivée du guide 6, est assuré par les faces latérales 14 de l'évidement définissant les branches du V.

Selon l'invention, la surface du substrat 16 sur laquelle est formé le guide 6 présente une orientation cristalline 〈1,0,0〉 ; le guide 6 est parallèle à l'orientation cristalline 〈0,1,-1〉 du substrat et les faces 14 de l'évidement 10 en V sont des plans 〈2,1,1〉 du substrat 8. Ces plans 〈2,1,1〉 sont des plans d'arrêt de gravure.

Grâce au procédé de l'invention, le couplage optique entre la fibre 4 et le guide 6 est optimum et permet une stabilité mécanique de l'ensemble fibre-support. De plus, les risques de dégradation de la face clivée 12 du guide, lors de l'approche de la fibre 4, sont fortement diminués par rapport au procédé connu de réalisation de ce support.

En outre, avec le support de l'invention, il est possible de réaliser un positionnement du coeur d'une fibre à moins de 1µm près dans la direction verticale Z.

On décrit ci-après la fabrication, conforme à l'invention, du support de couplage de fibre de la figure 1.

On effectue tout d'abord, comme représenté sur la figure 2, l'épitaxie successive des différentes couches semi-conductrices de la structure monolithique à guide optique que l'on souhaite coupler à une fibre optique, sur la surface 16 du substrat 8 d'orientation cristalline 〈1,0,0〉, ainsi que des couches d'arrêt de gravure.

Ainsi, on trouve dans l'ordre, une couche d'arrêt de gravure 18 au-dessus du substrat en GaInAsP de 25nm d'épaisseur ; une couche 20 d'InP de confinement optique inférieur de 1µm d'épaisseur ; une couche active 22 en GaInAsP de 650nm d'épaisseur ; une couche 24 de confinement optique supérieur en InP de 300nm d'épaisseur ; une couche 26 d'arrêt de gravure en GaInAsP de 25nm d'épaisseur puis une couche 28 d'InP de 700nm d'épaisseur.

La composition de la couche 18 et celle de la couche 26 doivent être telles que le substrat 8 et la couche 28 respectivement puissent être gravés sélectivement par rapport à ces couches 18 et 26. Des compositions en In et P dans le GaInAsP respectivement de 0,743 et de 0,405 peuvent être utilisées (pour une formule In_{0,743}Ga_{0,257}As_{0,595}P_{0,405}).

En outre, la composition de la couche 22 doit être telle qu'elle présente un indice de réfraction supérieur à celui des couches de confinement 20 et 24. En particulier, les compositions en In et P de la couche 22 peuvent être respectivement en 0,743 et 0,405.

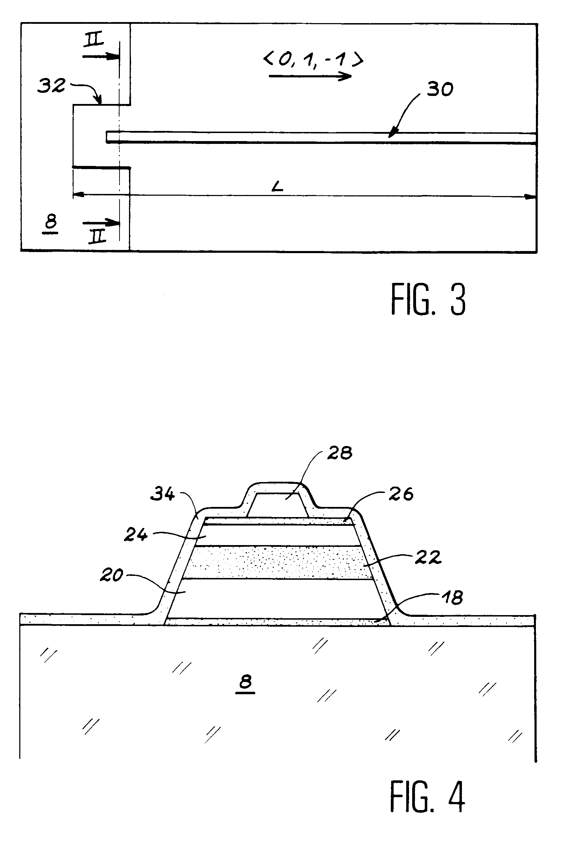

Après l'épitaxie de ces différentes couches par MOCVD (dépôt chimique en phase vapeur en utilisant des organométalliques) ou autres méthodes d'épitaxie ou de dépôt connues, on réalise une gravure de la couche 28 pour former un ruban 30 assurant le confinement latéral de la lumière dans la couche active 22. Ce ruban a typiquement une largeur 1 de 3µm et la longueur L représentée sur la figure 3, de plusieurs centaines de µm. Cette gravure est réalisée par attaque chimique en utilisant un mélange de HCl et de H₃PO₄ dans le rapport 1/1 en volume. Selon l'invention, la plus grande dimension L (figure 3) du ruban 30 est parallèle à la direction cristallographique 〈0,1,-1〉 de la structure.

On effectue ensuite une gravure de l'ensemble des couches pour donner la forme de la structure guide. Le motif obtenu porte la référence 32. La gravure des couches d'InP est réalisée comme ci-dessus et la gravure des couches de GaInAsP est réalisée par une attaque chimique à l'aide de la solution H₃PO₄ et HCl dans les proportions en volume 1/1.

La figure 2 et la figure 3 montrent respectivement la structure finale obtenue après ces différentes gravures, en coupe et en vue de dessus.

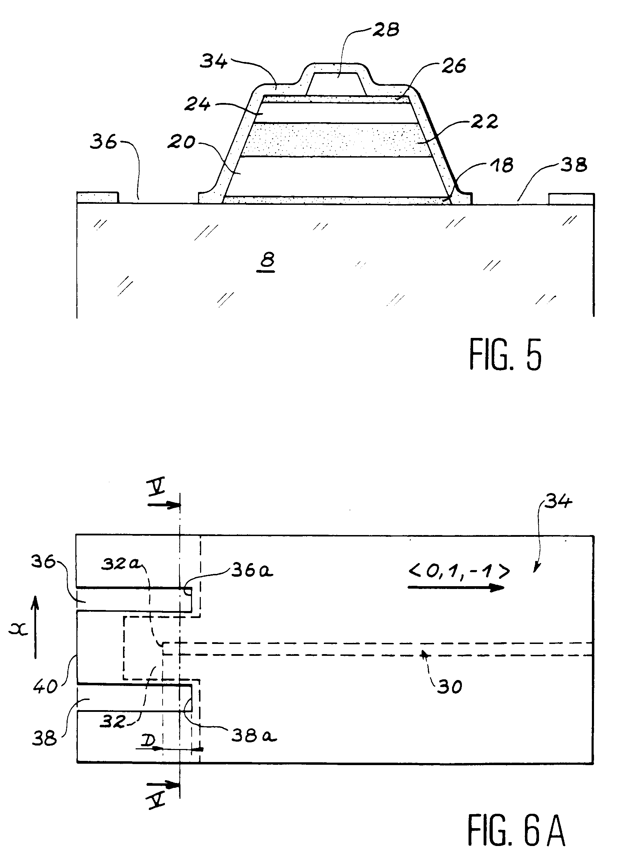

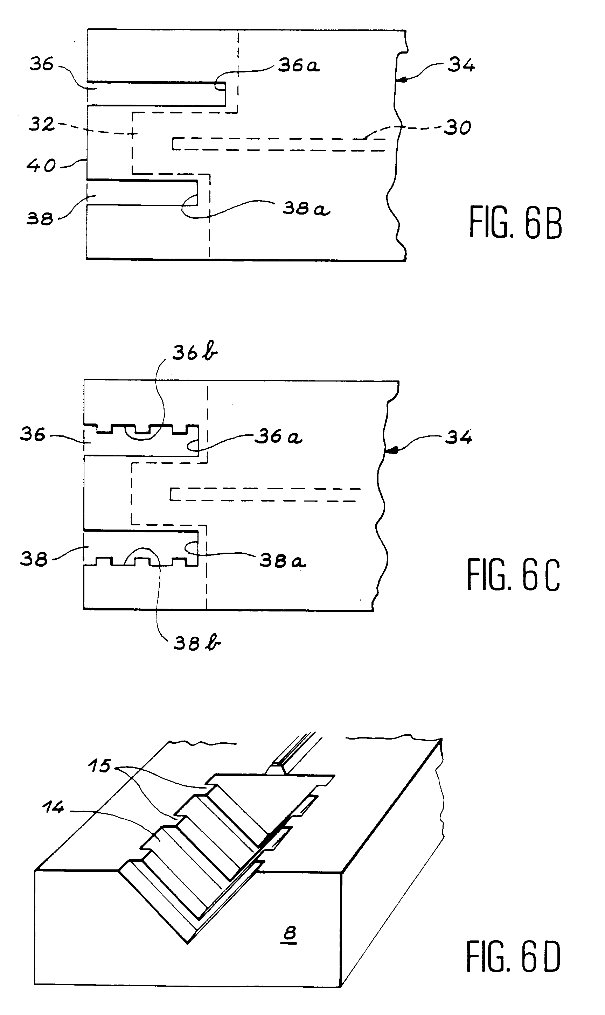

On recouvre alors l'ensemble de la structure gravée 32 et du substrat, comme représenté sur la figure 4, par une couche de protection 34 de Si₃N₄ de l'ordre de 100 nm d'épaisseur. Ensuite, comme représenté sur les figures 5 et 6 respectivement en coupe et en vue de dessus, on réalise deux ouvertures longitudinales, respectivement 36 et 38 dans la couche 34 de nitrure de part et d'autre du motif gravé 32. Ces ouvertures 36 et 38 sont orientées parallèlement à la direction 〈0,1,-1〉 de la structure cristalline et communiquent entre elles par le bord 40 de l'échantillon, bord orienté perpendiculairement à la surface 16 du substrat et à la direction 〈0,1,-1〉. On note x, la direction du bord 40. Ainsi, le bord 40 de l'échantillon est parallèle à un plan de clivage de la structure.

En outre, les extrémités respectivement 36a et 38a (figure 6) des ouvertures 36 et 38, opposées au bord 40, sont aussi parallèles aux plans de clivage selon x de la structure et situées à une distance D en retrait par rapport à l'extrémité 32a du motif 32 gravé. Cette distance D peut varier de quelques µm à quelques centaines de µm, selon l'épaisseur de la structure à cliver.

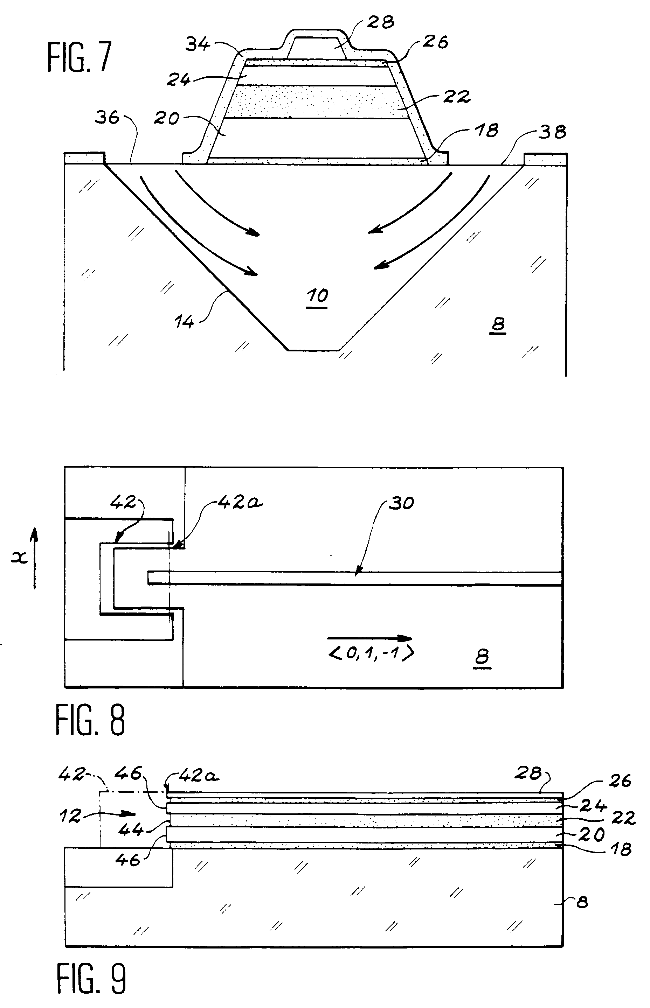

On effectue ensuite une attaque anisotrope chimique humide du substrat 8 mis à nu, lors de la réalisation des ouvertures 36 et 38, en utilisant la couche 34 ainsi gravée comme masque de gravure, comme représenté sur la figure 7 en coupe.

La gravure chimique du substrat est réalisée en utilisant un mélange d'HCl et de H₃PO₄ dans le rapport en volume 1/1.

Du fait de la communication des ouvertures 36 et 38 par le bord 40 de l'échantillon, on obtient une gravure 10 complète du substrat 8 en-dessous du motif 32, conduisant à la formation d'une poutre flexible 42 surplombant le substrat 8. L'évidement 10 ainsi obtenu dans le substrat 8 a la forme d'un V dans le plan de la figure.

Les faces latérales 14 du V sont en fait des plans d'arrêt 〈2,1,1〉 de gravure du substrat 8. Ainsi, l'attaque chimique ne se propage pas latéralement, au-delà de ces plans de gravure.

La figure 8 montre en vue de dessus la structure obtenue après élimination du masque 34 de nitrure de silicium.

On soumet alors la poutre 42 fixée en son extrémité 42a, appelée extrémité fixe, à un jet de fluide sous pression et en particulier à un jet d'air sous pression, entraînant un clivage de la poutre au niveau de son extrémité fixe 42a selon la direction x. La structure obtenue est celle de la figure 9 en coupe longitudinale.

Cette technique de microclivage est douce et permet l'obtention d'une face 12, clivée efficacement pour le guide optique.

En outre, comme représenté sur la figure 9, une légère attaque chimique sélective conduit à l'obtention d'un retrait 44 de la couche active 22, assurant ainsi sa protection, lors de l'approche de la fibre optique sur la face clivée 12, les protubérances 46 de part et d'autre de la couche 44 empêchant l'extrémité de la fibre de rencontrer la couche active. Ainsi, le procédé de l'invention permet de diminuer les risques de dégradation de la face clivée de la zone active, contrairement aux procédés de l'art antérieur.

Selon un mode de mise en oeuvre particulier de l'invention, les deux ouvertures 36 et 38 pratiquées dans la couche 34 de protection présentent dans la direction du guide respectivement des longueurs différentes. C'est ce qui apparaît notamment sur la figure 6B. Les extrémités 36a et 38a se trouvent à des distances différentes du bord 40. Lors du clivage de la poutre, il peut apparaître dans son axe, c'est-à-dire au voisinage du guide optique, une petite protubérance qui peut être accompagnée de défauts cristallins. Lorsque les ouvertures 36, 38 sont de longueurs inégales, il est possible d'obtenir une poutre légèrement dissymétrique et, par conséquent un clivage dissymétrique. Il en résulte que les éventuels défauts cristallins sont décalés par rapport à l'axe de la poutre et donc par rapport au guide optique. Ils ne risquent pas ainsi de perturber la lumière du guide d'onde.

Selon un autre mode de mise en oeuvre particulier de l'invention, les ouvertures 36, 38 pratiquées dans la couche de protection 34 présentent selon l'axe longitudinal respectivement un bord extérieur crénelé. On entend par bord extérieur le bord de chaque ouverture 36, 38 qui est le plus éloigné du guide optique. Les bords extérieurs crénelés sont représentés sur la figure 6C avec les références 36b, 38b respectivement.

Grâce aux bords crénelés, lors de la gravure chimique, il se forme sur les faces latérales 14 du V des nervures 15 (figure 6D). Les nervures permettent de réduire la surface de contact entre la fibre optique et les faces latérales et de rendre leur assemblage plus précis. En effet, lors de la gravure chimique des faces latérales, il peut y apparaître des défauts cristallins limitant la précision de la mise en place de la fibre. Grâce aux nervures, la surface des plans 〈111〉 ou 〈211〉 en contact avec la fibre selon la direction 〈10-1〉 est réduite. La probabilité d'un défaut cristallin susceptible de gêner l'assemblage précis est donc réduite. La figure 6D montre à titre d'exemple et de façon très schématique les flancs 14 en V munis de nervures 15.

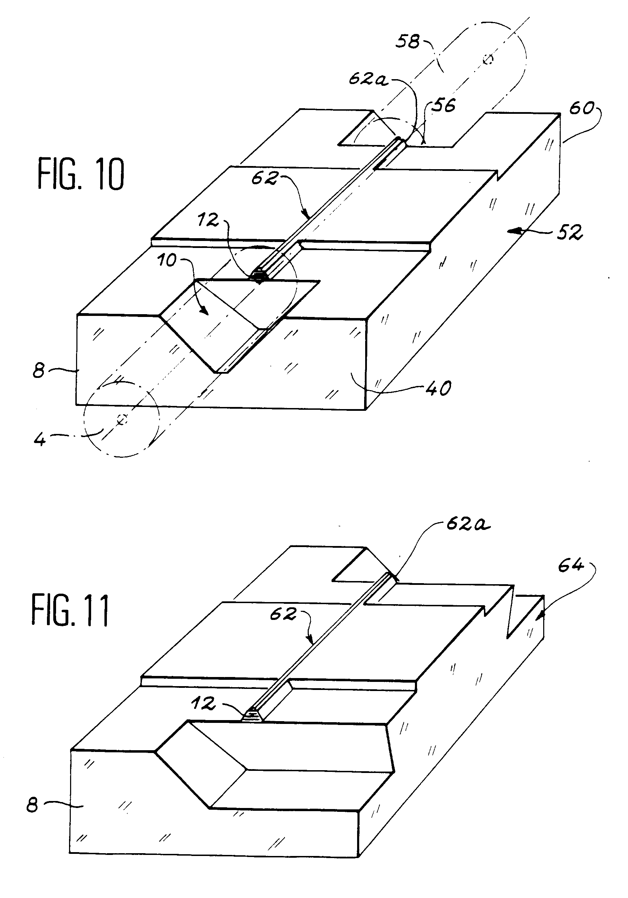

Sur la figure 10, on a représenté une variante de réalisation du support de fibres, conforme à l'invention. Ce support de référence générale 52 se différencie du support 2 de la figure 1 par le fait qu'il comporte un second évidement 56 en forme de V situé dans le prolongement du guide optique 62, permettant ainsi le support d'une deuxième fibre optique 58. La réalisation de ce support bi-fibre 52 est identique à celle décrite précédemment à l'exception de la forme du masque de gravure qui doit comporter deux autres ouvertures, orientées selon la direction 〈0,1,-1〉 et formées du côté 60 opposé au bord 40 de l'échantillon. Ce guide optique 62 comporte donc une seconde face clivée 62a autoprotégée, en regard des extrémités clivées de la fibre 58.

Le support de couplage représenté sur la figure 11 est aussi un support bi-fibre optique dans lequel les parties du substrat situées du même côté du guide 62 (à droite sur la figure 11) et de part et d'autre des faces clivées 12 et 62a du guide 62 ont été éliminées par gravure du substrat, soit simultanément à la gravure du substrat dégageant les poutres, soit en fin de procédé, en utilisant un masque approprié.

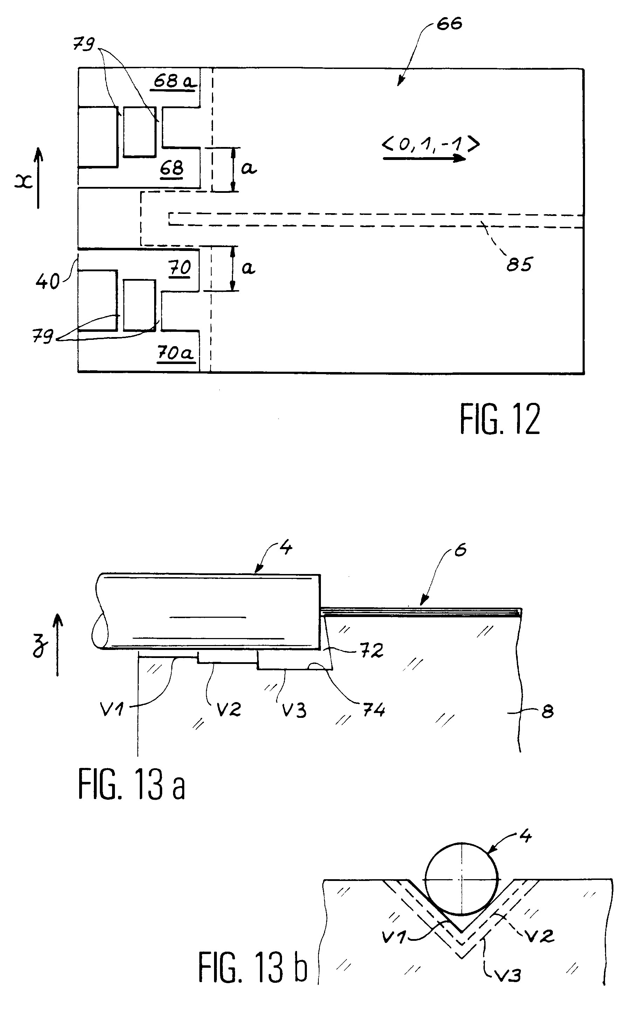

Comme indiqué précédemment, la forme du masque de nitrure fixe la forme de l'évidement dans le plan 〈1,0,0〉. Ainsi, en utilisant un masque tel que représenté sur la figure 12, en vue de dessus, on obtient un évidement tel que représenté sur les figures 13a et 13b respectivement en coupe longitudinale et en perspective.

En particulier, le masque 66 de la figure 12 comporte deux premières ouvertures latérales 68 et 70 orientées selon la direction 〈0,1,-1〉 dont la largeur a, mesurée parallèlement à la direction x parallèle au plan de clivage de la poutre, augmente progressivement par rapport à l'axe du guide 85 (ici de l'extérieur vers l'intérieur de l'échantillon), et ce de façon séquentielle, conduisant ainsi à la formation de marches en vue de dessus pour le masque.

En utilisant la gravure chimique décrite précédemment puis le microclivage par jet d'air, on obtient, comme représenté sur les figures 13a et 13b, un évidement 72 ou sous-gravure du substrat 8 définissant 3V successifs V₁, V₂, V₃ dont les branches sont parallèles mais décalées dans la direction verticale z. Les branches correspondent aux sections des plans 〈2,1,1〉 par un plan 〈0,1,-1〉 perpendiculaire à la direction du guide 〈0,1,-1〉. Ainsi, la dimension de l'évidement en surface, selon le plan 〈1,0,0〉 varie progressivement.

En outre, le fond 74 de l'évidement définit un escalier.

Ce système permet un positionnement précis vertical de la fibre optique 4, selon qu'elle repose sur les plans 〈2,1,1〉 du V V₁ ou les plans 〈2,1,1〉 du V V₂, etc...

Par exemple, une augmentation de l'ouverture mesurée en surface du V de 1 µm entraînera une descente de l'axe de la fibre de 0,35 µm.

Si l'axe optique de la fibre est trop haut par rapport à l'axe optique du guide-ruban 6, il faut éliminer le V V₁ afin que l'axe optique de la fibre descende et que la fibre repose sur les plans 〈2,1,1〉 du V V₂, etc...

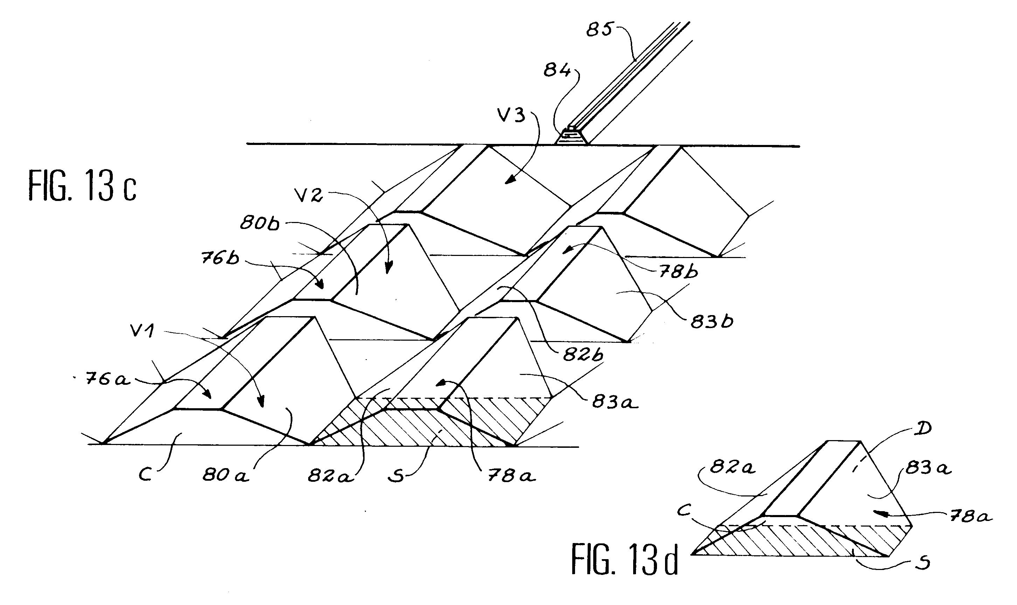

A cet effet, on réalise, lors de l'attaque chimique du substrat et en utilisant un masque approprié des "berlingots" (figures 13c et 13d) tels que 76a, 76b, 78a et 78b dont les faces en regard, respectivement 80a et 82a pour les "berlingots" 76a et 78a et 80b et 82b pour les "berlingots" 76b et 78b sont les plans 〈2,1,1〉 du substrat et constituent donc les "plans" des V.

L'élimination par simple fracture des "berlingots" 76a et 78a permet l'élimination du V V₁. De même, l'élimination des "berlingots" 76b et 78b permet l'élimination du V V₂ et donc le positionnement de la fibre 4 par rapport à la face clivée 84 du guide 85, dans le V₃.

Pour réaliser ces différents berlingots éliminables par simple arrachement, le masque de gravure doit être modifié comme représenté sur la figure 12. Il comporte deux ouvertures complémentaires respectivement 68a et 70a, disposées aussi selon la direction 〈0,1,-1〉.

Ainsi, ces ouvertures donnent en particulier dans des plans cristallins 〈2,1,1〉 les faces 78a et 83a du "berlingot" 78a. D'autres ouvertures 79 (figure 12) parallèles à l'axe x de quelques µm de large et espacées d'une centaine de µm vont révéler par attaque chimique les plans qui seront les faces C et D du "berlingot" 78a (voir figure 13d) . Ce "berlingot" 78a ne tient au substrat que par une surface de base S facilement cassable. (Les autres "berlingots" sont similaires à celui-ci et obtenus de la même façon).

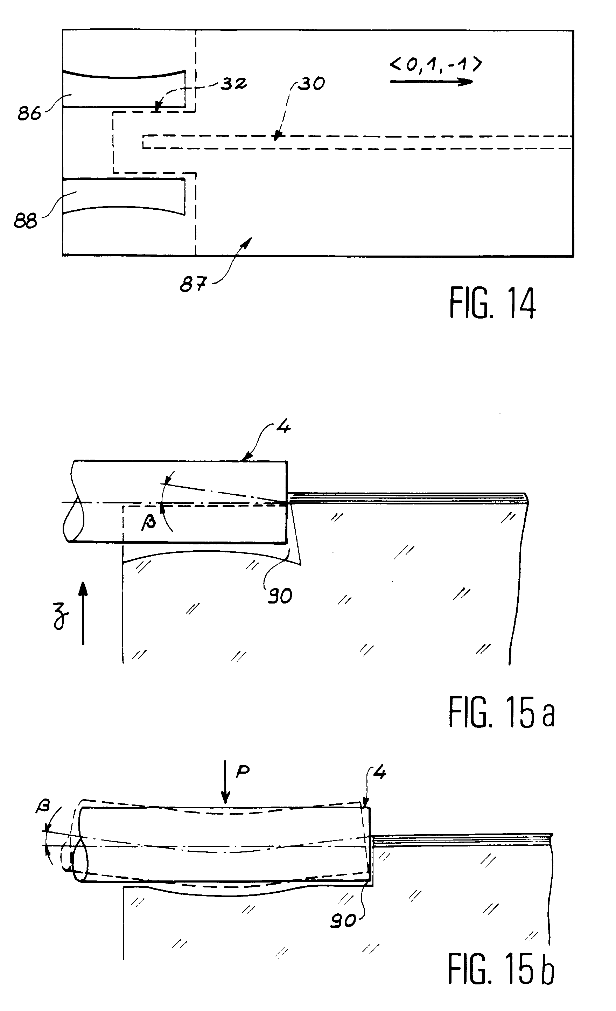

Un autre système de positionnement précis non séquentiel mais variant continûment peut être obtenu avec un masque 87 tel que représenté sur la figure 14, masque dont les ouvertures 86 et 88 varient donc continûment selon une forme de "diabolo".

Ce masque permet l'obtention d'une gravure en forme de V, 90 tel que représenté sur les figures 15a et 15b, à arête de fond légèrement bombée respectivement convexe ou concave. Par modification de l'inclinaison de la fibre 4 par rapport au plan <1,0,0> du substrat, d'un angle β (par exemple par pression P (figure 15b), on peut optimiser le couplage entre la zone active du guide et le coeur de la fibre. Le désalignement angulaire β est de quelques minutes d'arc. Le basculement de la fibre 4 modifie donc son point d'appui sur les plans du V 90.

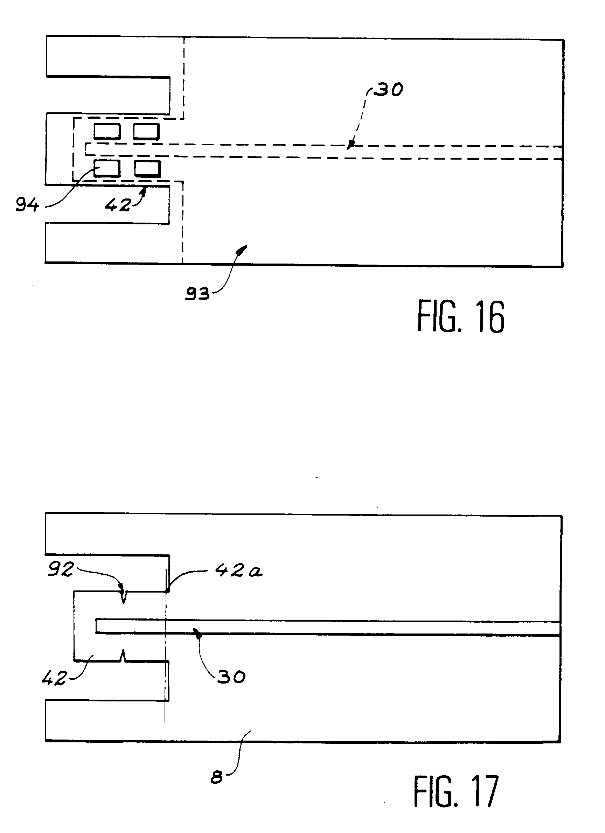

Afin d'améliorer l'attaque chimique du substrat pour dégager la poutre 42, et en particulier augmenter la vitesse d'attaque du substrat, il est possible de réaliser, comme représenté sur la figure 16 en vue de dessus, des ouvertures 94 dans le masque 93 de nitrure, ces ouvertures 94 étant disposées dans le prolongement au-dessus de la poutre et donc du motif 32.

En outre, afin de faciliter le microclivage de la poutre 42 (voir figures 8 et 9), il est possible, comme représenté en vue de dessus sur la figure 17, de réaliser une encoche 92 au niveau de la poutre 42 et légèrement en retrait de l'extrémité fixe 42a jouant le rôle d'amorce de clivage. Cette encoche peut être réalisée sur toute la largeur de la poutre ou bien uniquement sur l'un des bords ou les deux bords de la poutre. Cette encoche 90 doit être en avant de la face clivée 10 (figure 1), éloignée de la partie fixe de quelques µm, afin de s'affranchir de la gravure incomplète sous la poutre sur la face clivée 10. Cette encoche est réalisée lors de la gravure de la structure définissant la forme du motif 32.

La description donnée précédemment n'a été donnée qu'à titre illustratif, d'autres variantes de mise en oeuvre pouvant être envisagées. En particulier, le guide optique peut ne pas être rectiligne et être composé de plusieurs segments dont l'un au moins est parallèle à la direction cristalline 〈0,1,-1〉.

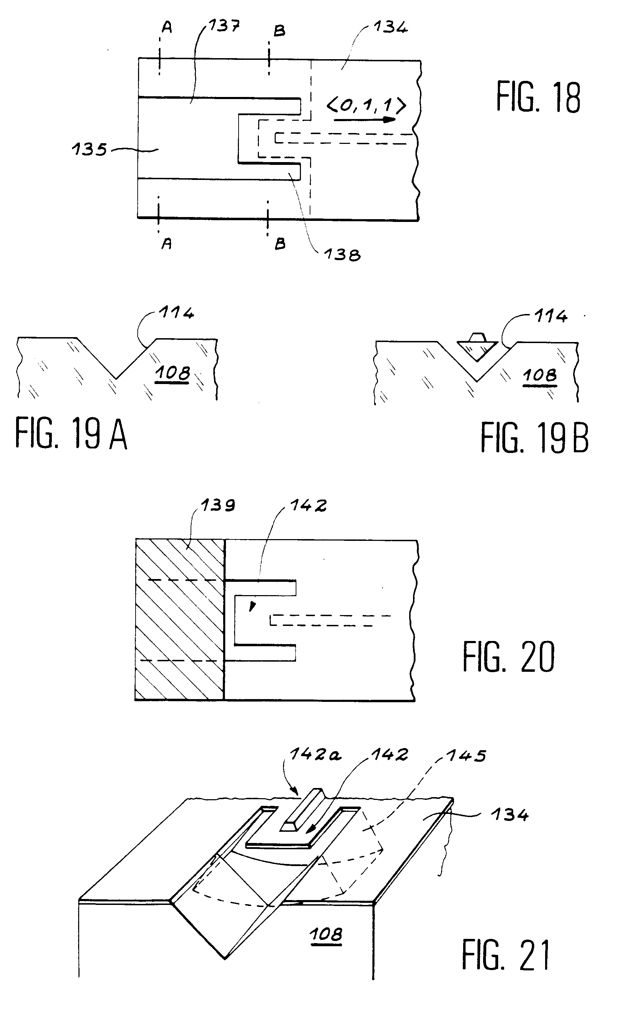

Par ailleurs, comme cela est mentionné plus haut, le guide optique peut aussi être réalisé selon une autre direction cristalline, et en particulier la direction 〈0,1,1〉. Dans ce cas, la gravure en forme de V est plus complexe car on ne peut plus mettre à profit les plans cristallins 〈1,1,1〉 ou 〈2,1,1〉 comme plans d'arrêt. La réalisation de la structure comporte tout d'abord la réalisation du guide optique dont les étapes de fabrication sont décrites plus haut. Une fois que le guide est formé, on recouvre l'ensemble de la structure avec une couche de protection résistant à la fois aux attaques chimiques et aux usinages ioniques. Sur la figure 18, cette couche porte la référence 134. Les éléments des figures 18 à 21 qui sont en commun avec les figures précédentes portent des références correspondantes auxquelles on a ajouté 100. De plus, tous les éléments ne sont pas représentés avec la même échelle pour des raisons de clarté des figures.

Dans la couche de protection 134 on pratique une ouverture en U 135 qui entoure une extrémité du motif 132. L'ouverture en U comporte une partie dite transversale 137 devant l'extrémité du motif et des branches 136, 138 s'étendant de part et d'autre du motif. Les branches 136, 138 correspondent respectivement aux ouvertures 36 et 38 de la figure 6.

Dans l'ouverture 135 de la couche de protection 134 on procède à un usinage ionique et de préférence à un usinage ionique réactif.

L'une des techniques suivantes, connues en soi, peut être utilisée : par exemple l'usinage ionique réactif dit RIE (Reactive Ion Etching), l'usinage par faisceau d'ions dit IBE (Ion Beam Etching) ou l'usinage par faisceau d'ions réactifs RIBE (Reactive Ion Beam Etching).

Grâce à cet usinage on réalise une gravure en V. Le profil en V 114 est montré aux figures 19A et 19B qui sont des sections de la structure gravée, respectivement selon les lignes A et B de la figure 18.

Une opération suivante consiste à former une poutre 142. Cette poutre correspondant à la poutre 42 des figures précédentes. Pour dégager la poutre 142 on procède à une attaque chimique sélective anisotrope, par exemple par voie humide.

Comme le montre la figure 20, avant de procéder à cette attaque un masque 139 est toutefois formé sur le substrat dans la région correspondant à la partie 137 de l'ouverture. Ce masque protège une portion de l'évidement en V, servant ultérieurement pour la mise en place de la fibre.

La figure 21 montre la structure après gravure. On constate que sous la poutre 142 une région 145 du substrat est éliminée, tandis que dans la région protégée par le masque 139, qui peut être éliminé après la gravure chimique, les flancs 114 du profil en V sont restés intacts.

Quand la poutre 142 est dégagée, une pression exercée par un jet de fluide permet son clivage au niveau de son extrémité 142a.

Le procédé de l'invention est parfaitement bien adapté à la réalisation d'une structure laser-photodétecteur intégrée sur InP agencée comme décrit dans le document 6.

En outre, le support de l'invention peut comporter plusieurs guides rubans parallèles à face clivée, chaque guide étant couplé, selon l'invention, à une fibre optique logée dans un V.

## Revendications

1. Procédé de fabrication d'une structure intégrée comportant au moins un guide optique clivé, comportant les étapes suivantes :
***a***) - épitaxier successivement sur une surface plane (16) d'un substrat monocristallin (8), parallèle à un premier plan d'orientation cristalline 〈1,0,0〉 du substrat comportant des plans d'arrêt de gravure (14), une couche d'arrêt de gravure (18) du substrat, une couche de confinement optique inférieur (20), une couche active (22) et une couche de confinement optique supérieur (24) ;
***b***) - graver les couches épitaxiées selon un motif souhaité (32) et de façon à former au moins un ruban (30) guide optique dont une partie au moins est orientée parallèlement à une première direction du substrat ;
***c***) - recouvrir la structure obtenue en ***b***) d'une couche de protection (34) résistant à une attaque chimique anisotrope par voie humide du substrat ; caractérisé en ce que la première direction est une direction d'orientation cristalline 〈0,1,-1〉 et en ce que le procédé comporte en outre les étapes suivantes :
***d***) - pratiquer de part et d'autre du motif (32), et dans la couche de protection (34), au moins deux ouvertures (36, 38) à axe longitudinal parallèle à la première direction du guide et communiquant selon une seconde direction (40) perpendiculaire à cette première direction et parallèle à un plan de clivage de la structure ;
***e***) - soumettre à une attaque chimique anisotrope le substrat mis à nu lors de l'étape ***d***), cette attaque entraînant une gravure (12) du substrat et la formation d'au moins une poutre (42) orientée selon la première direction et ayant une extrémité libre et une extrémité fixe (42a) ; et
***f***) - soumettre ladite poutre à l'action d'un jet d'air sous pression entraînant le clivage de la poutre au niveau de son extrémité fixe (42a).

2. Procédé selon la revendication 1, caractérisé en ce que le substrat (8) est en InP.

3. Procédé selon la revendication 2, caractérisé en ce que la couche d'arrêt de gravure (18) est en GaInAsP.

4. Procédé selon l'une quelconque des revendications 1 à 3, caractérisé en ce que la première direction étant l'orientation 〈0,11-1〉, on obtient une gravure en forme de V dont les branches sont perpendiculaires à ladite première direction et perpendiculaires à ladite surface plane (16).

5. Procédé selon l'une quelconque des revendications 1 à 4, caractérisé en ce qu'on élimine la couche de protection (34) avant de cliver la poutre.

6. Procédé selon l'une quelconque des revendications 1 à 5, caractérisé en ce que la couche de protection (34) est en nitrure de silicium.

7. Procédé selon l'une quelconque des revendications 1 à 6, caractérisé en ce qu'on effectue au moins une encoche (92) dans la structure, au niveau de l'extrémité fixe, avant Détape ***f***), jouant le rôle d'amorce de clivage.

8. Procédé selon l'une quelconque des revendications 2 à 7, caractérisé en ce que les couches de confinement (20, 24) sont en InP et la couche active (22) en GaInAsP.

9. Procédé selon l'une quelconque des revendications 1 à 8, caractérisé en ce que l'étape a consiste à épitaxier successivement sur un substrat (8) en InP, une couche d'arrêt de gravure (18) en GaInAsP, une couche de confinement optique inférieur (20) en InP, une couche active (22) en GaInAsP, une couche de confinement optique supérieur (24) en InP, une autre couche d'arrêt de gravure (26) en GaInAsP et une couche supérieure (28) d'InP de confinement latéral.

10. Procédé selon l'une quelconque des revendications 1 à 9, caractérisé en ce que les ouvertures (68, 70) ont une largeur (a) variable selon la seconde direction.

11. Procédé selon la revendication 10, caractérisé en ce que la largeur varie séquentiellement (68, 70) (figure 12).

12. Procédé selon la revendication 10, caractérisé en ce que la largeur varie continûment (86, 88) (figure 14).

13. Procédé selon la revendication 10, caractérisé en ce qu'on forme dans la couche de protection et de chaque côté du motif, au moins deux ouvertures supplémentaires (68a, 70a) de largeur variable et en ce qu'on effectue la gravure du substrat, entraînant la formation de "berlingots" (76a, 78a, 76b, 78b) éliminables par cassure dont deux faces en regard (80a, 82a ; 80b, 82b) définissent un V.

14. Procédé selon l'une quelconque des revendications précédentes, caractérisé en ce qu'on forme des ouvertures (94) dans le masque dans le prolongement du motif (32) et de l'emplacement prévu pour la poutre (42).

15. Procédé selon l'une quelconque des revendications précédentes, caractérisé en ce qu'on grave la structure obtenue en ***f***) de façon à éliminer au moins une partie de la structure qui fait saillie dudit plan de clivage.

16. Procédé selon la revendication 1, caractérisé en ce que les deux ouvertures (36, 38) pratiquées dans la couche de protection présentent dans la direction du guide respectivement des longueurs différentes de manière à obtenir un clivage dissymétrique de la poutre.

17. Procédé selon la revendication 1, caractérisé en ce que les ouvertures (36, 38) pratiquées dans la couche de protection présentent selon l'axe longitudinal respectivement un bord extérieur crénelé.

18. Support de couplage optique monolithique d'au moins une fibre optique, caractérisé en ce qu'il consiste en une structure guide intégrée à guide optique (6) à face clivée (12), obtenue par le procédé selon l'une quelconque des revendications 1 à 15, la gravure sous la poutre du substrat (8) formant au moins un logement (10) en V pour la fibre (4).

19. Support de couplage selon la revendication 18, caractérisé en ce qu'il comprend plusieurs V successifs éliminables (V₁, V₂, V₃) décalés dans la direction verticale (z) pour un positionnement précis de la fibre (4) par rapport à la face clivée (12) du guide optique.

20. Support de couplage selon la revendication 18, caractérisé en ce que le logement en V comporte des flancs (14) avec des nervures (15).

21. Procédé de fabrication d'une structure intégrée comportant au moins un guide optique clivé, comportant les étapes suivantes :
***a***) - épitaxier successivement sur une surface plane (116) d'un substrat monocristallin (108), parallèle à un premier plan d'orientation cristalline 〈1,0,0〉, une couche d'arrêt de gravure du substrat, une couche de confinement optique inférieur, une couche active et une couche de confinement optique supérieur ;
***b***) - graver les couches épitaxiées selon un motif souhaité (132) et de façon à former au moins un ruban (130) guide optique dont une partie au moins est orientée parallèlement à une première direction du substrat ;
***c***) - recouvrir la structure obtenue en ***b***) d'une couche de protection (134) résistant à une attaque chimique et à un usinage ionique ; caractérisé en ce que la première direction est une direction d'orientation cristalline 〈0,1,1〉 et en ce que le procédé comprend en outre les étapes suivantes :
***d***) - pratiquer dans la couche de protection une ouverture (135) en forme de U entourant une extrémité du motif (132), ladite ouverture (135) en U comportant une partie dite transversale (137) devant l^{'}extrémité du motif et des branches (136, 138) s'étendant respectivement de part et d'autre d'une portion du motif ;
***e***) - procéder à un usinage ionique dans l'ouverture (135) pour obtenir une gravure en V dont les branches sont perpendiculaires à la première direction et perpendiculaires à ladite surface plane ;
***f***) - recouvrir le substrat dans une région correspondant à la partie transversale (137) de l'ouverture (135), avec un masque (139) résistant à une attaque chimique anisotrope ;
***g***) - procéder à une attaque chimique sélective anisotrope dans une partie de l'ouverture comportant les branches de manière à former une poutre orientée selon la première direction, et ayant une extrémité libre et une extrémité fixe ; et
***h***) - soumettre ladite poutre à l'action d'un jet d'air sous pression entraînant le clivage de la poutre au niveau de son extrémité fixe (142a).

## Claims

1. Process for the production of an integrated structure having at least one cleaved optical guide, comprising the following stages:
a) successively epitaxying onto a planar surface (16) of a monocrystalline substrate (8), parallel to a first plane of crystal orientation 〈1,0,0〉 of the substrate having etching barrier planes (14), an etching barrier layer (18) for the substrate, a lower optical confinement layer (20), an active layer (22) and an upper optical confinement layer (24),
b) etching the epitaxied layers in accordance with a desired pattern (32) and so as to form at least one optical guide strip (30), whereof at least one portion is oriented parallel to a first direction of crystal orientation 〈0,1,-1〉 of the substrate,
c) covering the structure obtained in b) with a protection layer (34) resistant to wet anisotropic chemical etching of the substrate,
d) making on either side of the pattern (32) and in the protection layer (34) at least two openings (36, 38) having a longitudinal axis parallel to the first direction of the guide and communicating in a second direction (40) perpendicular to said first direction and parallel to a cleaving plane of the structure,
e) subjecting to said anisotropic chemical etching the substrate exposed during stage d), said etching operation bringing about an etching (12) of the substrate and the formation of at least one beam (42) oriented according to the first direction and having a free end (42a) and a fixed end; and
f) subjecting said beam to the action of a pressurized fluid jet bringing about the cleaving of the beam at the level of its fixed end (42a).

2. Process according to claim 1, characterized in that the substrate (8) is of InP.

3. Process according to claim 2, characterized in that the etching barrier layer (18) is of GaInAsP.

4. Process according to any one of the claims 1 to 3, characterized in that with the first direction being the orientation 〈0,1,-1〉, a V-shaped etching is obtained, whose branches are perpendicular to said first direction and perpendicular to said planar surface (16).

5. Process according to any one of the claims 1 to 4, characterized in that the protection layer (34) is eliminated before cleaving the beam.

6. Process according to any one of the claims 1 to 5, characterized in that the protection layer (34) is of silicon nitride.

7. Process according to any one of the claims 1 to 6, characterized in that at least one notch (92) is formed in the structure level with the fixed end, prior to stage f), and serving as a cleaving initiator.

8. Process according to any one of the claims 2 to 7, characterized in that the confinement layers (20, 24) are of InP and the active layer (22) of GaInAsP.

9. Process according to any one of the claims 1 to 8, characterized in that stage a consists of successively epitaxying on the InP substrate (8) a GaInAsP etching barrier layer (18), an InP, lower optical confinement layer (20), a GaInAsP active layer (22), an InP upper optical confinement layer (24), another GaInAsP etching barrier layer (26) and an upper InP lateral confinement layer (28).

10. Process according to any one of the claims 1 to 9, characterized in that the openings (68, 70) have a width (a) variable in the second direction.

11. Process according to claim 10, characterized in that the width varies sequentially (68, 70) (fig. 12).

12. Process according to claim 10, characterized in that the width varies continuously (86, 88) (fig. 14).

13. Process according to claim 10, characterized in that in the protection layer and on each side of the pattern are formed at least two supplementary openings (68a, 70a) of variable width and in that the etching of the substrate takes place in such a way as to form humbugs (76a, 78a, 76b, 78b) eliminatable by breaking and whose two facing faces (80, 82a; 80b, 82b) define a V.

14. Process according to any one of the preceding claims, characterized in that openings (94) are formed in the mask in the extension of the pattern (32) and the location provided for the beam (42).

15. Process according to any one of the preceding claims, characterized in that the structure obtained in f) is etched so as to eliminate at least part of the structure projecting from said cleaving plane.

16. Process according to claim 1, characterized in that the two openings (36, 38) made in the protection layer have, in the direction of the guide, respectively different lengths in order to obtain a dissymetrical cleaving of the beam.

17. Process according to claim 1, characterized in that the openings (36, 38) made in the protection layer have, according to the longitudinal axis respectively, an outer crenelated edge.

18. Monolithic optical coupling support for at least one optical fibre, characterized in that it consists of an integrated guide structure with an optical guide (6) having a cleaved face (12) obtained by the process according to any one of the claims 1 to 15, the etching beneath the beam of the substrate (8) forming at least one V-shaped cavity (10) for the fibre (4).

19. Coupling support according to claim 18, characterized in that it comprises several successive, eliminatable V's (V₁, V₂, V₃) displaced in the vertical direction (z) for a precise positioning of the fibre (4) with respect to the cleaved face (12) of the optical guide.

20. Coupling support according to claim 18, characterized in that the V-shaped cavity comprises lateral faces (14) with ribs (15).

21. Process for the production of an integrated structure having at least one cleaved optical guide, comprising the following stages:
a) - successively epitaxying onto a planar surface (116) of a mono-crystalline substrate (108), parallel to a first plane of crystal orientation 〈1,0,0〉, an etching barrier layer for the substrate, a lower optical confinement layer, an active layer and an upper optical confinement layer,
b) - etching the epitaxied layers in accordance with a desired pattern (132) and so as to form at least one optical guide strip (130), whereof at least one portion is oriented parallel to a first direction of the substrate,
c) - covering the structure obtained in b) with a protection layer (134) resistant to a chemical etching and to an ion etching, characterized in that the first direction is a crystal orientation direction 〈0,1,1〉 and in that the process also comprises the following stages:
d) - making in the protection layer a U-shaped opening (135) surrounding an end of the pattern (132), said U-shaped opening comprising a said transversal part (137) in front of the end of the pattern and branches (136, 138) extending on either side of a portion of the pattern,
e) - carrying out an ion etching in the opening (135) for obtaining a V-shaped etching the branches of which are perpendicular to said first direction and perpendicular to said planar surface,
f) - covering the substrate in a region corresponding to the transversal part (137) of the opening (135) with a mask resistant to anisotropic chemical etching,
g) - carrying out a selective anisotropic chemical etching in a part of the opening comprising the branches so as to form a beam oriented according to the first direction, and having a free end and a fixed end, and
h) - subjecting said beam to the action of a pressurized fluid jet bridging about the cleaving of the beam at the level of its fixed end (142a).

## Patentansprüche

1. Herstellungsverfahren einer integrierten Struktur mit wenigstens einem abgespaltenen Lichtwellenleiter, das folgende Schritte umfasst:
***a)*** - Sukzessives Abscheiden einer unteren Lichteinschließungsschicht (20), einer aktiven Schicht (22) und einer oberen Lichteinschließungsschicht (24) mittels Epitaxie auf einer planen Fläche (16) eines monokristallinen Substrats (8), parallel zu einer ersten, Ätzsperrebenen (14) enthaltenden kristallinen Orientierungsfläche 〈1,0,0〉 des Substrats;
***b)*** - Ätzen der Epitaxie-Schichten nach einem gewünschten Muster (32) um wenigstens einen optischen Wellenleiterstreifen (30) zu bilden, von dem wenigstens ein Teil parallel zu einer ersten Richtung des Substrats ausgerichtet ist;
***c)*** - Bedecken der in ***b)*** erhaltenen Struktur mit einer Schutzschicht (34), widerstandsfähig gegen einen anisotropen nass-chemischen Angriff auf das Substrat; **dadurch gekennzeichnet,**
dass die erste Richtung eine Kristallorientierungsrichtung 〈0,1-1〉 ist, und dadurch, dass das Verfahren außerdem folgende Schritte umfasst.
***d)*** - Anbringen von wenigstens zwei Öffnungen (36, 38) auf beiden Seiten des Musters (32) und in der Schutzschicht (34) mit zur ersten Richtung des Wellenleiters paralleler Längsachse, die in einer zweiten Richtung (40) kommunizieren, die zu dieser ersten Richtung senkrecht und zu einer Spaltungsebene der Struktur parallel ist;
***e)*** - Durchführen eines anisotropen chemischen Angriffs auf das in dem Schritt ***d)*** freigelegte Substrat, wobei dieser Angriff eine Ätzung (12) des Substrats und die Bildung wenigstens eines nach einer ersten Richtung orientierten Balkens (42) zur Folge hat, der ein freies Ende und ein festes Ende (42a) hat; und
***f)*** - Abspalten des genannten Balkens in Höhe seines festen Endes (42a), indem man ihn der Wirkung eines Druckluftstrahls aussetzt.

2. Verfahren nach Anspruch 1, dadurch gekennzeichnet, dass das Substrat aus InP ist.

3. Verfahren nach Anspruch 2, dadurch gekennzeichnet, dass die Ätzsperrschicht (18) aus GaInAsP ist.

4. Verfahren nach einem der Ansprüche 1 bis 3, dadurch gekennzeichnet, dass man, wenn die erste Richtung die Orientierung 〈0,1-1〉 ist, eine Ätzung mit der Form eines V erhält, dessen Zweige senkrecht zu der genannten ersten Richtung und senkrecht zu der genannten planen Fläche (16) sind.

5. Verfahren nach einem der Ansprüche 1 bis 4, dadurch gekennzeichnet, dass man die Schutzschicht (34) entfernt, ehe man den Balken abspaltet.

6. Verfahren nach einem der Ansprüche 1 bis 5, dadurch gekennzeichnet, dass die Schutzschicht (34) aus Siliziumnitrid ist.

7. Verfahren nach einem der Ansprüche 1 bis 6, dadurch gekennzeichnet, dass man in der Struktur in Höhe des festen Endes, vor dem Schritt ***f)*** wenigstens eine Kerbe (92) anbringt, die die Rolle des Spaltungsauslösers spielt.

8. Verfahren nach einem der Ansprüche 1 bis 7, dadurch gekennzeichnet, dass die Einschließungsschichten (20, 24) aus InP sind und die aktive Schicht (22) aus GaInAsP ist.

9. Verfahren nach einem der Ansprüche 1 bis 8, dadurch gekennzeichnet, dass der Schritt ***a)*** darin besteht, auf einem Substrat (8) aus InP nacheinander mittels Epitaxie eine Ätzsperrschicht (18) aus GaInAsP, eine untere Lichteinschließungsschicht (20) aus InP, eine aktive Schicht (22) aus GaInAsP, eine obere Lichteinschließungsschicht (24) aus InP, eine weitere Ätzsperrschicht (26) aus GaInAsP und eine obere seitliche Einschließungsschicht (28) aus InP abzuscheiden.

10. Verfahren nach einem der Ansprüche 1 bis 9, dadurch gekennzeichnet, dass die Öffnungen (68, 70) eine in der zweiten Richtung veränderliche Breite (a) haben.

11. Verfahren nach Anspruch 10, dadurch gekennzeichnet, dass die Breite sich sequentiell verändert (68, 70) (Figur 12).

12. Verfahren nach Anspruch 10, dadurch gekennzeichnet, dass die Breite sich kontinuierlich verändert (86, 88) (Figur 14).

13. Verfahren nach Anspruch 10, dadurch gekennzeichnet, dass man in der Schutzschicht und auf jeder Seite des Musters wenigstens zwei zusätzlich Öffnungen (68a, 70a) von veränderlicher Breite anbringt, und dass man das Ätzen des Substrats, durchführt, das die Bildung von wegbrechbaren Elementen (76a, 78a, 76b, 78b) zur Folge hat, deren beiden gegenüberstehenden Flächen (80a, 82a; 80b, 82b) ein V definieren.

14. Verfahren nach einem der vorhergehenden Ansprüche, dadurch gekennzeichnet, dass man in der Maske, in der Verlängerung des Musters (22) und der für den Balken (42) vorgesehenen Stelle Öffnungen (94) anbringt.

15. Verfahren nach einem der vorhergehenden Ansprüche, dadurch gekennzeichnet, dass man die in ***f)*** erhaltene Struktur ätzt, um wenigstens einen Teil der Struktur zu eliminieren, die aus der genannten Spaltungsebene vorsteht.

16. Verfahren nach Anspruch 1, dadurch gekennzeichnet, dass die beiden Öffnungen (36, 38), angebracht in der Schutzschicht, in der Richtung des Wellenleiters jeweils unterschiedliche Längen aufweisen, um eine asymmetrische Spaltung des Balkens zu erhalten.

17. Verfahren nach Anspruch 1, dadurch gekennzeichnet, dass die beiden in der Schutzschicht angebrachten Öffnungen (36, 38) in der Richtung der Längsachse jeweils einen gezahnten Außenrand aufweisen.

18. Monolithischer optischer Kopplungstrager wenigstens einer optischen Faser, dadurch gekennzeichnet, dass er durch eine integrierte Wellenleiterstruktur mit einem Lichtwellenleiter (6) mit einer Abspaltungsfläche (12) gebildet wird, hergestellt durch das Verfahren nach einem der Ansprüche 1 bis 15, wobei die Ätzung des Substrats (8) unterhalb des Balkens wenigstens einen V-förmigen Sitz (10) für die Faser (4) bildet.

19. Kopplungsträger nach Anspruch 18, dadurch gekennzeichnet, dass er mehrere aufeinanderfolgende eliminierbare V (V₁, V₂, V₃) umfasst, die in der vertikalen Richtung (z) versetzt sind, für eine genaue Positionierung der Faser (4) in Bezug auf den Lichtwellenleiter.

20. Kopplungsträger nach Anspruch 18, dadurch gekennzeichnet, dass der V-förmige Sitz Flanken (14) mit Rippen (15) umfasst.

21. Herstellungsverfahren einer integrierten Struktur mit wenigstens einem abgespaltenen Lichtwellenleiter, das folgende Schritte umfasst:
***a)*** - Sukzessives Abscheiden einer Ätzsperrschicht des Substrats, einer unteren Lichteinschließungsschicht, einer aktiven Schicht und einer oberen Lichteinschließungsschicht mittels Epitaxie auf einer planen Fläche (116) eines monokristallinen Substrats (108), parallel zu einer ersten kristallinen Orientierungsfläche 〈1,0,0〉;
***b)*** - Ätzen der Epitaxie-Schichten nach einem gewünschten Muster (132) um wenigstens einen optischen Wellenleiterstreifen (130) zu bilden, von dem wenigstens ein Teil parallel zu einer ersten Richtung des Substrats ausgerichtet ist;
***c)*** - Bedecken der in ***b)*** erhaltenen Struktur mit einer Schutzschicht (134), widerstandsfähig gegen einen chemischen Angriff und eine Ionenbearbeitung;
**dadurch gekennzeichnet,**
dass die erste Richtung eine Kristallorientierungsrichtung 〈0,1,1〉 ist, und dadurch, dass das Verfahren außerdem folgende Schritte umfasst:
***d)*** - Anbringen einer U-förmigen Öffnung (135), die ein Ende des Musters (132) umgibt, wobei die U-formige Öffnung (135) einen sogenannten transversalen Teil (137) umfasst, vor dem Ende des Musters und der Zweige (136, 138), die sich beiderseits eines Teils des Musters erstrecken;
***e)*** - Durchführen einer Ionenbearbeitung in der Öffnung (135), um eine Ätzung mit der Form eines V zu erhalten, dessen Zweige senkrecht zu der ersten Richtung und senkrecht zu der genannten planen Fläche sind;
***f)*** - Abdecken des Substrats mit einer gegen einen anisotropen chemischen Angriff widerstandsfähigen Maske (139) in einem Bereich, der dem transversalen Teil (137) der Öffnung (135) entspricht;
***g)*** - Durchführen eines selektiven anisotropen chemischen Angriffs in einem die Zweige enthaltenden Teil der Öffnung, um einen gemäß einer ersten Richtung orientierten Balken zu bilden, der ein freies Ende und ein festes Ende hat; und
***h)*** - Abspalten des genannten Balkens in Höhe seines festen Endes (142a), indem man ihn der Wirkung eines Druckluftstrahls aussetzt.
